# EUROPEAN PATENT SPECIFICATION

(11) **EP 4 245 508 B1**
(45) Date of publication and mention of the grant of the patent: **17.07.2024**
(21) Application number: 22161760.8
(22) Date of filing: 14.03.2022
(51) Int. Cl.: B29C 70/12, B29C 70/44, B27N 3/18, B27N 5/02, B29C 33/50, B29C 53/04, B29C 53/42, B29C 53/82, B29C 53/84, B29C 70/14, B29C 70/54, B29C 70/68

(54) **METHOD FOR MANUFACTURING A COMPOSITE ARTICLE**
VERFAHREN ZUR HERSTELLUNG EINES VERBUNDARTIKELS
PROCÉDÉ DE FABRICATION D'UN ARTICLE COMPOSITE

(43) Date of publication of application: 20.09.2023
(73) Proprietor: PaperShell AB, 543 50 Tibro (SE)
(72) Inventor: BREITHOLTZ, Anders, 426 71 Västra Frölunda (SE); HOLMKVIST, Anders, 468 33 VARGÖN (SE)
(74) Representative: AWA Sweden AB

(56) References cited:
- US-A- 3 791 783
- US-A1- 2002 100 566
- US-A1- 2016 297 962
- US-A1- 2019 118 426

## Description

### Technical field

The present invention relates to a method for manufacturing a composite article.

### Background

In view of the growing awareness of the negative environmental impacts of global warming and pollution of sea and soil, it is a necessity to replace pure fossil-based plastics, mineral filled plastics and fiber reinforced plastics (FRP), such as glass fiber reinforced plastics (GFRP) and carbon reinforced plastics (CFRP), with more environmentally friendly alternatives. FRP composites such as GFRP and or CFRP composites, exhibit a high or very high strength-to-weight ratio, and is extremely rigid due to the pronounced length and strength of the manmade non-degradable fibers. These FRP composites are often used in various applications where e.g. flexural strength, impact resistance and/or weather resistance is of importance, like in vehicles, in protective sport appliances, buildings, electric housing and the like. However, the environmental impact of these materials is high in both manufacturing of raw materials like glass or carbon fiber, production of an intermediate of the same, and disposal and/or recycling. Attempts have been made to replace fossil-based polymers in GFRP and CFRP materials with more environmentally friendly alternatives, e.g. bio based or bio attributed polymers. Further, attempts have been made to replace the glass or carbon fiber with natural fibers such as flax, hemp, sisal etc. However, the major challenge for both bio based and/or bio attributed, and renewable and/or natural fiber alternatives for GFRP and CFRP composites is the lack of sufficient volumes and consistency of quality in supply that can compete with the fossil based polymers and manmade fibers.

US2002100566A1 discloses a process of making paper which utilizes hydroxy-phenoxyether polymers to provide an increase in sizing or strength of that paper. Hydroxy-phenoxyether polymers are intermixed with the pulp slurry or web during paper making. Otherwise, these dispersions or solutions are applied to formed paper. Molding process uses an inflatable rubber bladder, which is used to expand wet cellulose material against heated walls of a polished die.

Therefore, there exists a need for improved methods for manufacturing environmentally friendly and complex-shaped articles.

### Summary

An object of the present invention is to provide a method for manufacturing a composite article, which at least partly alleviates the above-mentioned draw-backs. This, and other objects, that will become apparent in the following, are accomplished by a method for manufacturing a composite article as defined in claim 1.

The inventive method has proven highly promising for producing a plurality of composite articles having simple or complex shapes such as frames for squash, tennis and padel rackets, bicycle helmets, tubes, handlebars, and bottles.

According to one aspect, not in accordance with the claimed invention, there is provided a composite article obtainable by the inventive method.

### Brief description of the drawings

The above objects, as well as additional objects, features, and advantages of the present invention which is defined in the appended claims, will be more fully appreciated by reference to the following illustrative and non-limiting detailed description of embodiments of the present invention, when taken in conjunction with the accompanying drawings, wherein:
Figs. 1a-c depict, in cross-section, a schematic illustration at least one sheet, an inflatable means and a mold according to embodiments of the invention.
Figs. 2a-f schematically depicts, in cross-section, composite articles manufactured according to embodiments of the invention.
Fig. 3 schematically depicts from different perspectives, composite articles manufactured according to embodiments of the invention.
Figs. 4a-b schematically depicts an embodiment where the composite article is manufactured from three sheets.
Fig. 5a-d depicts different steps of the inventive method.

The figures are not necessarily to scale, and generally only show parts that are necessary in order to elucidate the inventive concept, wherein other parts may be omitted or merely suggested.

### Detailed description

The present disclosure relates to new and enhanced methods for producing a composite article using a mold and inflatable means for pressig said article into a desired shape.

There is an aim to replace fossil-based polymers in GFRP and CFRP materials with more environmentally friendly alternatives, e.g. bio based or bio attributed polymers, and to replace the glass or carbon fiber with natural fibers.

Natural fiber composites (NFC) are divided into non-wood fiber based composites and, wood fibers and wood particles based composites. Wood fibers are often shorter in length than other natural fibers like jute or flax. Due to the greater length of the non-wood fibers (natural fibers) e.g. the potential in flexural strength driven applications is greater than with the wood fibers and/or wood particles. Also, non-wood fibers have often high (>50%) cellulose content, which delivers a high tensile strength, and degree of cellulose crystallinity, whereas natural fibers have some disadvantages because the high cellulose content implies a large amount hydroxyl groups (OH) in the fiber that can attract water molecules, thus causing swelling of the fiber and initiating natural retting process. This results in voids at the interface of the composite, which will affect the mechanical properties and loss in dimensional stability.

A large and stable renewable resource of wood fibers is cellulosic fibers of different wood species, such as conifer or eucalyptus, coming from forest industries, such as pulp and paper production. Recently, a number of NFC materials have been produced combining cellulosic fibers from wood and polymers to decrease the environmental impacts and yet create load-bearing articles. Such materials are usually manufactured by mixing and compounding into granulates with compounders extruder, obtaining granulates for injection molding.

A well-known solution of creating single curved, or developable, composite articles based on cellulosic fibers is wood veneer that comprises layers, wherein the long wood fibers in each layer are often placed perpendicularly to the wood fibers in the adjacent layers, and wherein the layers are heat-pressed in a single curved shape, such as a seat for a chair. For more complex composite articles, such as composite articles comprising blind holes or through holes and/or double curved or non-developable, surfaces, special and expensive 3D veneer or plastics is currently the only option, since the veneer will tear and break at attempts to create a double-curved surface.

Accordingly, the present disclosure provides improved methods for manufacturing environmentally friendly and complex-shaped composite articles by using a mold an inflatable means to shape the composite article. The methods include the steps of providing at least one sheet comprising a composite material, wherein the composite material comprises cellulosic fibers and a composite agent selected, not according to the claimed invention, from the group of: thermoset resins reactive thermoplastic resins, cellulose, hemicellulose, nanocellulose, lignin, bio-based polymers, substituted and non substituted furan, and combinations thereof, providing an inflatable means, providing a mold, wherein the mold comprises at least two structurally distinct mold portions, arranging the at least one sheet and the inflatable means in the mold such that the at least one sheet covers at least part of an outer surface of the inflatable means and such that the mold encloses the at least one sheet and the inflatable means, and subjecting the at least one sheet to a pressing process by inflating the inflatable means to form a composite article, wherein the inflation is performed such that the composite material is subjected to a pressure in the range of from 7 bar to 1000 bar, and wherein the pressing process is conducted at a temperature in the range of from 70 °C to 300 °C for a time period in the range of from 20 seconds to 60 minutes.

The inventive method has proven highly promising for producing a plurality of composite articles having simple or complex shapes such as frames for squash, tennis and padel rackets, bicycle helmets, tubes, handlebars, and bottles. Complex shapes may refer to shapes comprising bends having a small radius, acute, right or obtuse angles, or sharp edges.

The method for manufacturing a composite article is advantageous in that it provides a method for manufacturing a composite article having a relatively complex structure while having a homogenous distribution of the ingoing materials.

The methods may provide a composite article comprising a through-hole or a blind hole. The through hole may extend from a first portion to a second portion of the composite article, while the blind hole is partly intact between the first portion and the second portion of the composite article.

The inventors have surprisingly realized that the present method induces floating of the composite material, in particular floating of the cellulosic fibers of the composite material, thereby creating a composite article having an even distribution of the composite material. Expressed differently, the inventive method provides a homogenous distribution of the cellulosic fibers throughout the composite material. Cracks and tears which may appear during the manufacturing process are advantageously filled with the composite material as a result of the induced floating. This advantageously allows for the production of a composite article having substantially equal material properties throughout the article. This advantageously decreases the risk of local imperfections in the composite article, thus decreasing the risk of local portions having undesirable mechanical properties such as being prone to crack formation.

The present method further advantageously induces joining or merging of the at least one sheet to the sheet itself, or another sheet, which advantageously allows for improved mechanical properties. Expressed differently, substantially no traces of the interface between the at least one sheet to itself or another sheet may be visible in the produced composite article. Thus, the risk of adhesive or cohesive failure, which may occur when adhering sheets using e.g. glue to each other, is decreased or avoided.

The composite agent contributes to internal mechanical cross-linking of the fibers to each other, such that the fibers are caught and locked in each other, thus improving and contributing to the tensile and/or flexural strength of the manufactured composite article.

The present method further induces hardening or annealing of the composite material thus providing a composite article having improved material properties, e.g. stiffness, tensile strength, flexural strength and/or hardness, as compared to the provided at least one sheet.

The inventive method manufactures a composite article which is substantially dry. This advantageously leads to the composite article being relatively easy to remove from the mold. This improves the quality of the produced composite article since the risk of the composite article being adhered to the mold is decreased. A composite article being partially or completely adhered to the mold after production could necessitate a costly and difficult removal procedure and/or result in the composite article breaking when being removed from the mold. Further, the methods of the invention decreases the need for cleaning the mold between the runs since substantially the whole composite article may be removed from the mold. Consequently, the inventive method allows for faster repetitions, i.e. manufacturing a plurality of composite articles in sequence.

The pressure when pressing the article in the methods of the invention may be in the range of from 7 bar to 750 bar, such as from 10 bar to 750 bar, such as from 10 bar to 500 bar, such as from 10 bar to 350 bar, such as from 20 bar to 350 bar, such as from 20 bar to 250 bar.

It is understood that inflating the inflatable means subjects the composite material to a pressure so as to produce the composite article. Expressed differently, by inflating the inflatable means the composite material may be considered pressed between the inflatable means and the mold. The inflatable means may be inflated by introducing a pressurized fluid (liquid or gas) into the inflatable means.

The pressing process may be conducted at a temperature in the range of from 70 °C to 300 °C, such from 70 °C to 250 °C, such as from 100 °C to 250 °C, such as from 100 °C to 200 °C, such as from 125 °C to 200 °C, such as from 125 °C to 175 °C.

The temperature of the pressing process of the manufacturing process may be controlled by heating the mold. The mold may be heated by e.g. flowing hot water in conduits provided in the mold, electrically heating heat elements provided in the mold, by conductively heating at least part of the mold, or by placing the mold in an oven. It is understood that the mold conducts heat so as to provide an even heat distribution to the composite article. The mold may comprise a metal, such as aluminum, e.g. aluminum alloys, or steel.

The time period may be in the range of from 20 seconds to 60 minutes, such as from 1 minute to 60 minutes, such as 1 minute to 45 minutes. Alternatively, the time period may be at least 10 seconds, such as at least 20 seconds, such as at least 30 seconds, such as at least 60 seconds.

The term "mold" as referred to herein, should generally be understood as a unit comprising a cavity in which e.g. at least one sheet and an inflatable means may be arranged. It is understood that the unit comprises at least two structurally distinct mold portions. The mold portions may be arranged to enclose a cavity in which the at least one sheet and the inflatable means may be arranged.

The cavity of the mold may be defined by an inner surface of the mold. The inner surface of the mold may be configured in a plurality of ways depending on the desired shape of the composite article.

The term "composite article" as referred to herein in, should generally be understood as an article comprising at least to two substances with different physical and chemical properties, in which each substance retains its identity while contributing desirable properties to the whole.

The term "inflatable means" as referred to herein, should generally be understood as a means which is capable of expanding when inflated, e.g., when a pressurized fluid is introduced into it. It is understood that the inflatable means comprises an outer surface and an inner surface. Inflating the inflatable means may thus be construed as introducing a pressurized fluid to the inside of the inflatable means such that the pressurized fluid is in contact with the inner surface. The pressurized fluid may for example be air, water, or nitrogen gas. The inflatable means may have a tubular shape, a circular shape, or substantially any other shape. The inflatable means may be considered an inflatable balloon, an inflatable bladder or an inflatable tube. It is understood that the inflatable means may be collapsible, e.g., when not inflated or pressurized. For example, the inflatable means may comprise a stretchable, expandable and heat resistant silicone or rubber material.

The composite articles produced by the inventive method have high moisture resistance, which is highly beneficial when the composite articles are intended for outdoor use, or for use in a moist environment, such as a bathroom or in a humid climate. Further, the finishing of the surface of composite articles manufactured by the present invention is highly decorative and aesthetically appealing and may further be adjusted to the desired application. In particular, the surface of the composite articles may be shiny or dull, or comprise a desired pattern. Further, the surface of the manufactured composite article has proven wear-resistant. Thus, costly and/or non-eco-friendly post-processing steps to improve wear-resistance, such as lacquering or coating, may be avoided.

In some embodiments, the at least one part of an outer surface of the inflatable means is substantially the whole outer surface of the inflatable means. This advantageously improves the contact area between the at least one sheet and itself or another sheet.

Thermoset resins may be substituted and non-substituted furan, epoxy, polyurethane, or phenolic resin. The reactive thermoplastic resins may have similar performance after curing as thermosets and may be in liquid or powder form. Such composite agents are readily available, cost-efficient, oftentimes biodegradable, and environmentally friendly. In particular, the composite agent used in the present invention is polyfurfuryl alcohol (PFA). Among bio-based polymers polylactic acid, the poly L-lactide, polyhydroxybuturate, polyhydroxyalkalonates (PHAs), polyamide, polypropylene (PP) and polyethylene terephthalate can be used.

In some embodiments not according to the claimed invention, the composite agent may be selected from the list of cellulose, hemicellulose, nanocellulose, lignin, and combinations thereof. Polyfurfuryl alcohol, cellulose, hemicellulose, nanocellulose, and lignin may be derived from e.g. trees, plants and waste biomass. Thus, an environmentally friendly product may be manufactured as compared to using e.g. artificial composite agents. Thus, a more environmentally friendly method is obtained.

In some embodiments, the at least one sheet may be at least two sheets, such as at least three sheets. The at least two sheets advantageously allows for overlapping the sheets when arranged to cover at least part of the outer surface of the inflatable means. This advantageously allows for an increased contact area between the sheets prior to and during pressing. When the pressing process is conducted the at least two sheets may thus float and merge so as to form an improved composite article.

The inventive method further allows for possibility to determine fiber orientation in the composite article. To this end, the fibers may be positioned such that the longitudinal extension of the major portion of the fibers is aligned in the same direction. This may be achieved by arranging sheets in a certain direction. In particular, the cellulosic fibers of each of the sheets may be oriented such that the longitudinal extensions of the cellulosic fibers are substantially parallel. The sheets may then be arranged such that the longitudinal extensions of the cellulosic fibers of one of the at least two sheets is parallel to the longitudinal extensions of the cellulosic fibers of the other of the at least two sheets. It has been shown that the tensile and/or flexural strength in the direction being parallel to the longitudinal extension of the fibers is significantly higher compared to the tensile and/or flexural strength in the direction being perpendicular to the longitudinal extension of the fibers, e.g. as much as two times higher. Therefore, it is possible to design composite articles such that tensile and/or flexural and/or flexural strength is adapted to the intended use.

In some embodiments, the at least one sheet may comprise small perforations, such as micro perforations. The at least one sheet comprising perforations allows for a more bendable sheet. Thus, the at least one sheet may more easily be arranged to cover at least part of an outer surface of the inflatable means. Further, the perforations advantageously allows for the at least one sheet to adapt to and follow the shape of the inside of the mold to which it is pressed by the inflatable means during the manufacturing process. Thus, composite articles having more complex shapes may be even more easily and effectively manufactured. The perforations are preferably provided along a distance of the at least one sheet where bending is desired, i.e. to more efficiently adapt to the mold. The inventive method allows for the perforations being filled with the composite material during the pressing process thus producing a composite article comprising substantially no traces of said perforations. It is understood that the perforations may be e.g. blind holes or through holes.

A complex shape may for example be a tube-like structure comprising bends and branching, such as a Y-shaped, X-shaped, H-shaped or T-shaped tube. It is understood that a complex shape may comprise a tapered portion. A complex shape may further refer to a shape having differently shaped and/or sized cross-sections. It is understood that the complex shape may comprise a blind-hole or a through hole.

In some embodiments, the at least one sheet is arranged in the mold as a stack of sheets or at least one roll. Arranging the at least one sheet in the mold as a stack of sheets or at least one roll advantageously allows for easier arrangement of the at least sheet to cover at least part of an outer surface of the inflatable means. This further allows for the at least one sheet to be pressed against the mold so as to produce a composite article having a complex structure while decreasing the risk of crack formation. In one example, the at least one sheet is arranged as a roll which allows for arranging the inflatable means inside the at least one roll. The at least one sheet may be arranged as a plurality of sequentially arranged rolls. A roll may be considered a bent sheet.

The stack of sheets advantageously allows for tailoring the thickness of the produced composite article by i.e. providing stacks of different thicknesses or providing stacks comprising different amounts of sheets. The stack of sheets are advantageously easily arranged to cover at least part of the outer surface of the inflatable means. The stack of sheets may be construed as a plurality of patches.

Arranging the at least one sheet in the mold as a stack of sheets or at least one roll may advantageously increase the contact area between the sheet itself or between e.g. a first sheet and a second sheet. Thus the floating may be further improved which advantageously aids in evenly distributing the composite material in the composite article.

In some embodiments, the at least one sheet has a thickness of up to 2 mm, such as up to 1.5 mm, such as up to 1 mm. The specified thicknesses allow for an easily bendable and formable sheet which advantageously allows for the at least one sheet to adapt to the shape of the mold. It is understood that the shape of the mold correspond to the shape of the produced composite article. As an alternative, the at least one sheet may have a thickness of from 0.1 mm to 1 mm, such as from 0.2 mm to 1 mm, such as from 0.2 mm to 0.8 mm.

In some embodiments, the step of inflating the inflatable means comprises introducing a pressurized fluid through two separate inlets in the inflatable means. This advantageously aids in producing complex articles.

In some embodiments, the method may further comprise a step of:
- removing material from the composite article by milling or drilling. By removing material from the composite article, it may be even more customized after the pressing process.

In some embodiments, the method may further comprise a step of:
- shaping the composite article using laser cutting.

By shaping the composite article using laser cutting the composite article may be tailored even more. Shaping the composite article may for example be cutting the composite article in to several parts, removing part of the composite article, providing the composite article with a radius, or removing sharp edges from the composite article.

In some embodiments, the method further comprises a step of
- sealing the mold using screwing means, clamping means or pressing means.

Sealing the mold further ensures that the mold stays closed during the pressing process thus advantageously ensuring that the produced composite article has the desired shape, e.g. corresponds to the shape of the cavity of the mold.

In some embodiments, the method may further comprise a step of
- perforating the at least one sheet.

Perforating the at least one sheet improves the bendability and the processability of the at least one sheet. Expressed differently, a perforated sheet may when pressed more easily adapt to the mold. It is understood that the at least one sheet may be perforated prior to the step of perforating the at least one sheet. Perforating the at least one sheet may be understood as a step of removing material from the at least one sheet. In some embodiments, the removed material is arranged in the mold together with the at least one sheet prior to pressing. The removed material may thus be part of the produced composite article which advantageously decreases the amount of waste material of the method. Thus, an even more environmentally friendly and cost-effective manufacturing method is obtained. The inventors have surprisingly found that a composite article manufactured from at least one sheet and waste material exhibits substantially analogous material properties as a composite article manufactured using no waste material.

In some embodiments, the method comprises a step of cooling the composite article. The cooling may be active or passive.

In some embodiments, the method may further comprise a step of
- removing the inflatable bladder from the composite article.

In some embodiments, the composite agent may be polyfurfuryl alcohol. It has been found that using polyfurfuryl alcohol as a composite agent in the inventive process provides a self-extinguishing composite article as determined according to ISO 3795.

In some embodiments, the at least one sheet may be a polyfurfuryl alcohol impregnated kraft paper.

The specific at least one sheet provides a composite article having improved material properties, e.g. hydrophobicity and being self-extinguishable as determined to ISO 3795. Kraft paper as such is known to the person skilled in the art.

The term "polyfurfuryl alcohol impregnated kraft paper" as referred to herein, may generally be understood as a kraft paper which has been impregnated or infused with a polyfurfuryl alcohol.

In some embodiments, the polyfurfuryl alcohol impregnated kraft paper comprises 60 to 90 wt% of cellulosic fibers having a maximum length of 10 mm, such as a maximum length of 4 mm, and 10 to 40 wt% of a composite agent selected from hemicellulose, nanocellulose, lignin, polyfurfuryl alcohol, or combinations thereof, such as polyfurfuryl alcohol.

In some embodiments, the cellulosic fibers may have a maximum length of 10 mm, such as maximum 4 mm.

The specified length further improves the floating induced by the inventive method. Without wishing to be bound by any particular theory, the advantageous floating properties may be due to the relatively short fibers in combination with the composite agent having a certain viscosity, that can be improved by e.g. adding max. 20% ethanol in the process, and in combination with the specified manufacturing parameters, e.g., pressure, temperature, and pressure, thus causing the fibers to float during manufacturing of the composite article.

Cellulosic fibers are made with ethers or esters of cellulose, which can be obtained from the bark, wood or leaves of plants, or from other plant-based material. Cellulosic fibers may be derived from the conversion of wood into wood pulp. The length of each cellulosic fiber in the composite material may be same as or different from the length of the other cellulosic fibers. Indeed, it is conceivable that some of the cellulosic fibers may have a length being greater than 10 mm, but the amount of these fibers should be considered negligible. By the term "negligible" is understood as an amount below 0.01 wt%. Cellulosic fibers may be provided in any suitable form, such as sheets, pellets or the like. The cellulosic fibers may be randomly oriented or may be oriented such that the longitudinal extensions of the fibers are substantially parallel.

The cellulosic fibers that may be used in the composite material for manufacturing the composite article can be recycled cellulosic fibers, which offers the advantage of decreasing the cost of the composite article even further and contributing to circular economy. On the other hand, the cellulosic fibers may be virgin cellulosic fibers, which provides an increased tensile and/or flexural strength of the composite article compared to when recycled cellulosic fibers are used. Further, it is conceivable that the cellulosic fibers is a mixture of recycled and virgin cellulosic fibers. The cellulosic fibers may comprise softwood kraft paper pulp, hardwood kraft paper pulp, sulfite fibers, organosolv fibers or combinations thereof. Preferably, the cellulosic fibers comprise from 50 to 90 wt% of the kraft paper pulp.

Aspects of the present disclosure will be described more fully hereinafter with reference to the accompanying drawings.

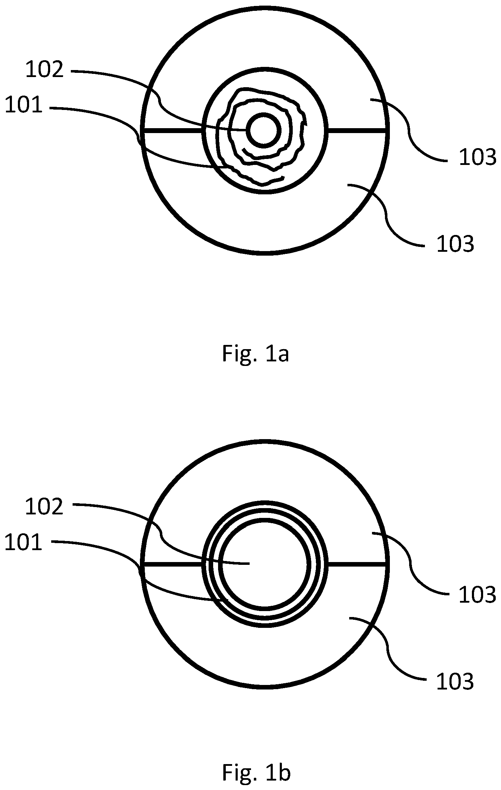

Figure 1a-c depict, in cross-section, a schematic illustration at least one sheet 101, an inflatable means 102 and a mold 103, wherein the mold comprises two structurally distinct portions. Figure 1a-b schematically depict two separate frozen time frames of embodiments of the inventive method.

In figure 1a, the at least one sheet 101 and the inflatable means 102 arranged in the mold 103 such that the at least one sheet 101 covers at least part of an outer surface of the inflatable means 102 and such that the mold 103 encloses the at least one sheet 101 and the inflatable means 102. In the present example the at least one sheet 101 is arranged as one roll. It is understood that in some examples a plurality of concentrically arranged rolls may be utilized in the inventive method.

In figure 1b, the at least one sheet 101 is subjected to a pressing process by inflating the inflatable means 102 to form a composite article.

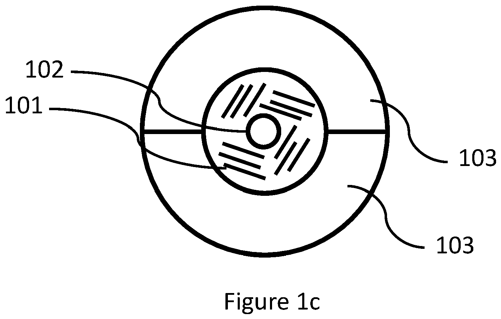

Figure 1c schematically shows an embodiment wherein the least one sheet 101 is arranged in the mold 102 as a stack of sheets. The stack of sheets may be subjected to a pressing process by inflating the inflatable means 102 to form a composite article, depicted in figure 1b.

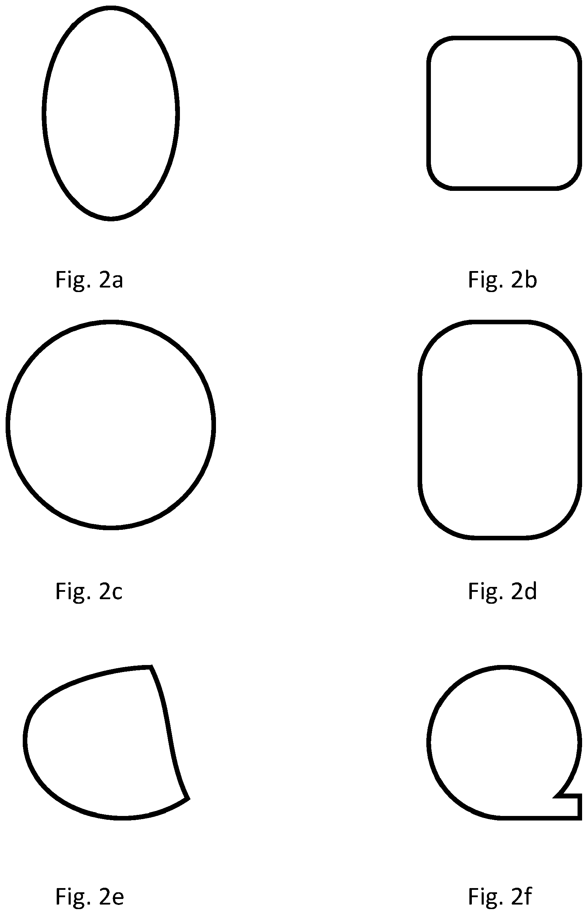

Figure 2a-f depict, in cross-section different examples of the produced composite article. In figure 2a the cross-section is oval. In figure 2b the cross-section is a squircle, i.e. a square with rounded corners. In figure 2c the cross-section is circular. In figure 2d the cross-section is a rounded rectangle. In figure 2e and 2f the cross-section is irregular. The cross-section of the composite article may substantially any shape. The composite article may comprise a hole such as a through-hole or a blind hole. The hole may extend in a longitudinal direction of the manufactured article. It is understood that the shape of the article may be defined by or correspond to an inner shape of the mold used in the manufacturing method. The composite article may in some examples be tapered or have an irregular shape. The manufactured composite article may for example have a circular cross-section in a first portion of the composite article, depicted in figure 2c, and an irregular cross-section in a second portion of the composite article as depicted in e.g. figure 2e.

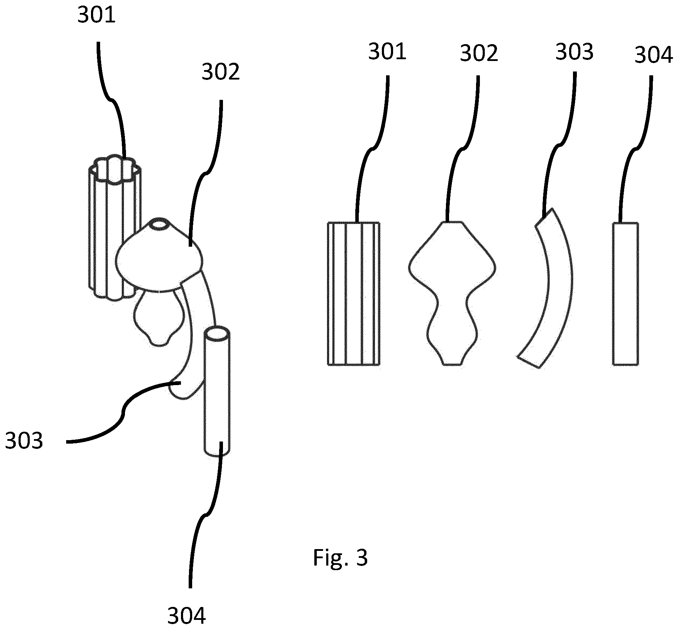

Figure 3 schematically depicts, from different perspectives, composite articles 301, 302, 303, 304, manufactured according to embodiments of the invention.

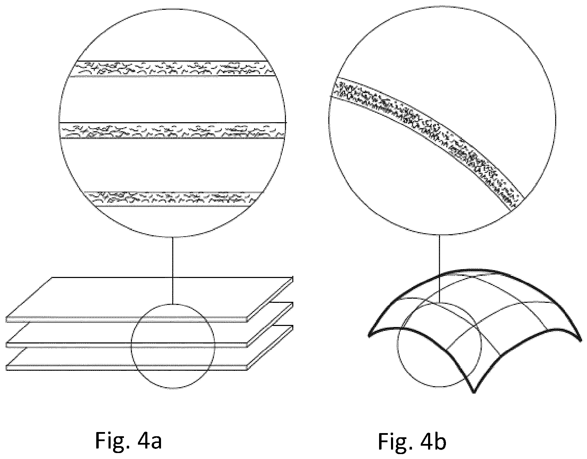

Figure 4a-b illustrates an embodiment wherein the composite article is manufactured from three sheets or three layers of sheet material. The three sheets may be arranged as a stack of sheets or at least one roll. Each of the sheets comprise the cellulosic fibers and the composite agent as described herein. The sheets in the laminate have equal thickness, as illustrated in figure 4a. In this example, it has surprisingly been found that although the composite article is manufactured from three sheets, the final composite article manufactured according to the present invention is perceived as being made of a homogenous composite material, as illustrated in figure 4b.

### Example

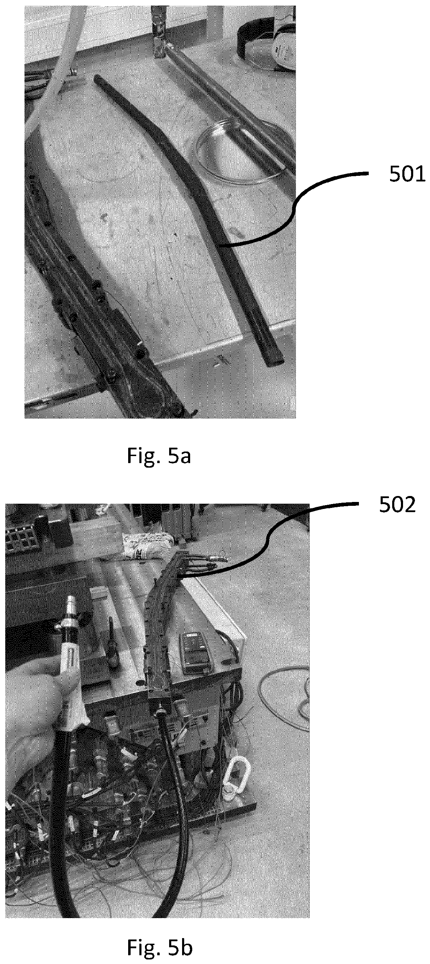

A composite structure was manufactured according to the following. As shown in figure 5a, one sheet of a polyfurfuryl impregnated kraft paper was rolled to form a roll 501, and an outer end of the roll was adhered to the body of the roll so as to decrease the risk of the roll uncoiling. An inflatable means, in this example a heat resistant, expandable tube, was arranged in the roll and placed in a mold 502 comprising two structurally distinct portions, see figure 5b. In the present example the mold 502 comprised a cavity having the shape of a bent tube. The mold 502 was sealed using screwing means.

The mold 502 was arranged in an oven and a pressure was introduced into the inflatable means so as to subject the sheet to a pressure of 7 bar. The mold and the sheet was heated to a temperature of 140 °C and kept at said temperature for a time period of 4 minutes.

The mold was removed from the oven and the composite article 503 was obtained from the mold.

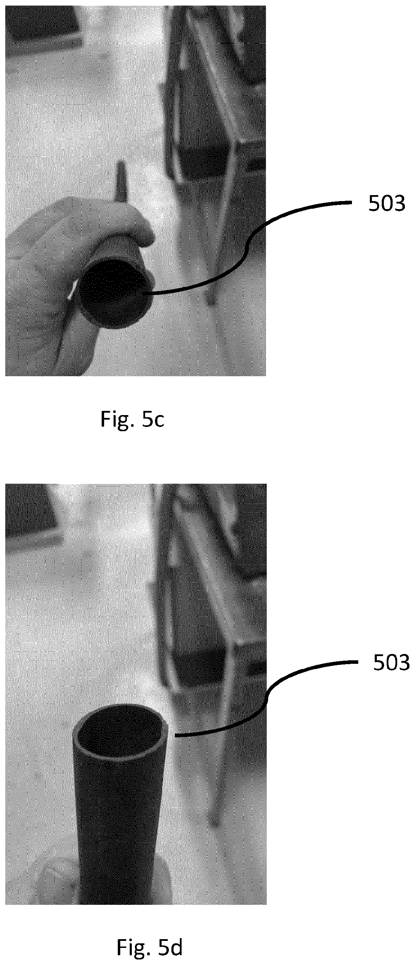

The obtained composite article 503 was cut into several pieces and inspected. As shown in figure 5c and 5d, the composite article 503 showed a homogenous material comprising no signs of delamination.

Thus, it is concluded that a homogenous composite article may successfully be manufactured using the inventive method.

Additionally, variations to the disclosed embodiments and examples can be understood and effected by the skilled person in practicing the claimed invention which is defined in the appended claims, from a study of the drawings, and the disclosure. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for manufacturing a composite article comprising the steps of:
- providing at least one sheet comprising a composite material, wherein the composite material comprises cellulosic fibers and a composite agent, wherein the composite agent is polyfurfuryl alcohol;
- providing an inflatable means;
- providing a mold, wherein the mold comprises at least two structurally distinct mold portions;
- arranging the at least one sheet and the inflatable means in the mold such that the at least one sheet covers at least part of an outer surface of the inflatable means and such that the mold encloses the at least one sheet and the inflatable means; and
- subjecting the at least one sheet to a pressing process by inflating the inflatable means to form a composite article, wherein the inflation is performed such that the composite material is subjected to a pressure in the range of from 7 bar to 1000 bar, and wherein the pressing process is conducted at a temperature in the range of from 70 °C to 300 °C for a time period in the range of from 20 seconds to 60 minutes.

2. The method according claim 1, wherein the at least one sheet is at least two sheets, such as at least three sheets.

3. The method according to any one of the preceding claims, wherein the at least one sheet comprises perforations, wherein the perforations comprise blind holes or through holes.

4. The method according to any one of the preceding claims,
wherein the at least one sheet is arranged in the mold as a stack of sheets, a plurality of patches, or at least one roll.

5. The method according to any one of the preceding claims,
wherein the at least one sheet has a thickness of up to 2 mm, such as up to 1.5 mm, more such as up to 1 mm.

6. The method according to any one of the preceding claims, wherein the step of inflating the inflatable means comprises introducing a pressurized fluid through two separate openings in the inflatable means.

7. The method according to any one of the preceding claims, further comprising a step of:
- removing material from the composite article by milling or drilling; and/or
- shaping the composite article using laser cutting.

8. The method according to any one of the preceding claims, further comprising a step of:
- sealing the mold using screwing means, clamping means or pressing means.

9. The method according to any one of the preceding claims, further comprising a step of:
- perforating the at least one sheet to form perforations comprising blind holes or through holes.

10. The method according to any one of the preceding claims, further comprising a step of:
- removing the inflatable bladder from the composite article.

11. The method according to any one of the preceding claims,
wherein the at least one sheet is a polyfurfuryl alcohol impregnated kraft paper.

12. The method according to any one of the preceding claims, wherein the cellulosic fibers have a maximum length of 10 mm.

## Patentansprüche

1. Verfahren zur Herstellung eines Verbundgegenstandes, folgende Schritte umfassend:
- Bereitstellen mindestens einer Bahn, die einen Verbundstoff umfasst, wobei der Verbundstoff Zellulosefasern und ein Verbundmittel umfasst, wobei das Verbundmittel ein Polyfurfurylalkohol ist,
- Bereitstellen eines aufblasbaren Mittels,
- Bereitstellen einer Form, wobei die Form mindestens zwei strukturell getrennte Formteile umfasst,
- Anordnen der mindestens einen Bahn und des aufblasbaren Mittels in der Form derart, dass die mindestens eine Bahn mindestens einen Teil einer Außenfläche des aufblasbaren Mittels bedeckt, und derart, dass die Form die mindestens eine Bahn und das aufblasbare Mittel umschließt, und
- Unterziehen der mindestens einen Bahn einem Pressprozess durch Aufblasen des aufblasbaren Mittels, um einen Verbundgegenstand zu bilden, wobei das Aufblasen derart durchgeführt wird, dass der Verbundstoff einem Druck im Bereich von 7 bar bis 1000 bar ausgesetzt wird, und wobei der Pressprozess bei einer Temperatur im Bereich von 70 °C bis 300 °C über eine Zeitspanne im Bereich von 20 Sekunden bis 60 Minuten ausgeführt wird.

2. Verfahren nach Anspruch 1, wobei die mindestens eine Bahn zwei Bahnen ist, wie beispielsweise mindestens drei Bahnen.

3. Verfahren nach einem der vorhergehenden Ansprüche, wobei die mindestens eine Bahn Perforationen umfasst, wobei die Perforationen Sacklöcher oder Durchgangslöcher sind.

4. Verfahren nach einem der vorhergehenden Ansprüche, wobei die mindestens eine Bahn in der Form als ein Stapel von Bahnen, mehrere Flecken oder mindestens eine Rolle angeordnet wird.

5. Verfahren nach einem der vorhergehenden Ansprüche, wobei die mindestens eine Bahn eine Dick von bis zu 2 mm aufweist, wie beispielsweise bis zu 1,5 mm, insbesondere bis zu 1 mm.

6. Verfahren nach einem der vorhergehenden Ansprüche, wobei der Schritt des Aufblasens des aufblasbaren Mittels das Einführen eines mit Druck beaufschlagten Fluids durch zwei separate Öffnungen in dem aufblasbaren Mittel umfasst.

7. Verfahren nach einem der vorhergehenden Ansprüche, ferner folgenden Schritt umfassend:
- Entfernen von Material aus dem Verbundgegenstand durch Schleifen oder Bohren und
- Formen des Verbundgegenstandes mit Hilfe von Laserschneiden.

8. Verfahren nach einem der vorhergehenden Ansprüche, ferner folgenden Schritt umfassend:
- Abdichten der Form mit Hilfe von Schraubmitteln, Klemmmitteln oder Pressmitteln.

9. Verfahren nach einem der vorhergehenden Ansprüche, ferner folgenden Schritt umfassend:
- Perforieren der mindestens einen Bahn, um Perforationen zu bilden, die Sacklöscher oder Durchgangslöcher umfassen.

10. Verfahren nach einem der vorhergehenden Ansprüche, ferner folgenden Schritt umfassend:
- Entfernen der aufblasbaren Blase von dem Verbundgegenstand.

11. Verfahren nach einem der vorhergehenden Ansprüche, wobei die mindestens eine Bahn mit Polyfurfurylalkohol imprägniertes Kraftpapier ist.

12. Verfahren nach einem der vorhergehenden Ansprüche, wobei die Zellulosefasern eine maximale Länge von 10 mm aufweisen.

## Revendications

1. Procédé de fabrication d'un article composite, comprenant les étapes de :
- prévision d'au moins une feuille comprenant un matériau composite, le matériau composite comprenant des fibres cellulosiques et un agent composite, l'agent composite étant de l'alcool polyfurfurfurylique ;
- prévision d'un moyen gonflable,
- prévision d'un moule, le moule comprenant au moins deux sections de moule structurellement distinctes ;
- disposition de l'au moins une feuille et du moyen gonflable dans le moule de manière à ce que l'au moins une feuille couvre au moins une partie d'une surface extérieure du moyen gonflable et à ce que le moule renferme l'au moins une feuille et le moyen gonflable ; et
- soumission de l'au moins une feuille à un processus de pression en gonflant le moyen gonflable afin de former un article composite, le gonflage étant réalisé de manière à ce que le matériau composite soit soumis à une pression de l'ordre de 7 bars à 1000 bars, et le processus de pression étant réalisé à une température de l'ordre de 70 °C à 300 °C pendant une durée de l'ordre de 20 secondes à 60 minutes.

2. Procédé selon la revendication 1, dans lequel l'au moins une feuille est composée d'au moins deux feuilles, comme au moins trois feuilles.

3. Procédé selon l'une quelconque des revendications précédentes, dans lequel l'au moins une feuille comprend des perforations, les perforations comprenant des trous borgnes et des trous traversants.

4. Procédé selon l'une quelconque des revendications précédentes, dans lequel l'au moins une feuille est disposée dans le moule sous forme d'une pile de feuilles, d'une pluralité de pièces, ou d'au moins un rouleau.

5. Procédé selon l'une quelconque des revendications précédentes, dans lequel l'au moins une feuille a une épaisseur de jusqu'à 2 mm, comme jusqu'à 1,5 mm, plus préférentiellement de jusqu'à 1 mm.

6. Procédé selon l'une quelconque des revendications précédentes, dans lequel l'étape de gonflage du moyen gonflable comprend l'introduction d'un fluide pressurisé à travers deux ouvertures séparées dans le moyen gonflable.

7. Procédé selon l'une quelconque des revendications précédentes, comprenant en outre une étape de :
- retrait du matériau de l'article composite par fraisage ou alésage ; et/ou
- façonnage de l'article composite en utilisant une découpe au laser.

8. Procédé selon l'une quelconque des revendications précédentes, comprenant en outre une étape de :
- scellement du moule en utilisant un moyen de vissage, un moyen de serrage ou un moyen de pression.

9. Procédé selon l'une quelconque des revendications précédentes, comprenant en outre une étape de :
- perforation de l'au moins une feuille pour former des perforations comprenant des trous borgnes ou des trous traversants.

10. Procédé selon l'une quelconque des revendications précédentes comprenant en outre une étape de :
- retrait de la poche gonflable de l'article composite.

11. Procédé selon l'une quelconque des revendications précédentes, dans lequel l'au moins une feuille est un papier kraft imprégné d'alcool polyfurfurfurylique.

12. Procédé selon l'une quelconque des revendications précédentes, dans lequel les fibres cellulosiques ont une longueur maximale de 10 mm.
